Europäisches Patentamt

European Patent Office

Office européen des brevets

(11) Publication number: **0 252 924 B1**

# EUROPEAN PATENT SPECIFICATION

(45) Date of publication of patent specification: **27.12.91**   (51) Int. Cl.⁵: **C10L 5/40**

(21) Application number: **86906294.3**

(22) Date of filing: **09.10.86**

(86) International application number:
**PCT/DK86/00112**

(87) International publication number:
**WO 87/02377 (23.04.87 87/09)**

(54) USE AS FUEL OF A MIXTURE OF CELLULOSIC FIBRES AND FAT-AND/OR OILCONTAINING SLUDGES OR WASTE MATERIALS.

(30) Priority: **16.10.85 DK 4724/85**

(43) Date of publication of application:
**20.01.88 Bulletin 88/03**

(45) Publication of the grant of the patent:
**27.12.91 Bulletin 91/52**

(84) Designated Contracting States:
**AT BE CH DE FR GB IT LI LU NL SE**

(56) References cited:
**EP-A- 35 431**
**EP-A- 91 532**
**DK-B- 148 119**
**DK-C- 60 661**
**FR-A- 839 271**

(73) Proprietor: **Danergi A/S**
**Jens Thisevej 34**
**DK-9700 Bronderslev(DK)**

(72) Inventor: **SAXBERG,Peter**
**Jens Thisevej 34**
**DK-9700 Bronderslev(DK)**

(74) Representative: **Olsen, Peter Vestergaard et al**
**Larsen & Birkeholm A/S Skandinavisk Paten-**
**tbureau Postbox 200**
**DK-2630 Taastrup(DK)**

## Description

The invention concerns the use as a fuel of a mixture of (1) cellulosic fibres, like straw and sugar-cane fibres, and (2) fat- and/or oil-containing sludge or waste material from slaughter houses, milk-condensation plants, fishing industry, distilleries, public sewage purifying plants and tanker transports, said mixture being prepared as a fuel immediately ready for use by heating the fat- and/or oil-containing sludge or waste material to 15-40°C after which the sludge or waste material is admixed with the cellulosic fibres, in such a proportion that the resultant fuel has a dry matter content of 40-80% by weight, preferably 60% by weight, and a water content of 20-60% by weight, preferably 40% by weight.

A number of industries and sewage purifying plants discharge respectively collect large quantities of oil- and/or fat-containing sludges. One part of the sludge is dumped on tips and another part is discharged into water recipients. The oil- and/or fat-containing sludge represents a substantial amount of fuel, that is not utilized today, but is a damaging factor to the environment the way it is discharged or dumped today. It is the object of the invention to indicate a way to utilize oil- and/or fat-containing sludges as fuel without transferring any pollution to the air recipient.

The Danish printed, examined patent application 148 119 discloses a process of manufacturing straw briquettes, where before the pressing, watery sludge from a smaller cleaning plant with sludge bed that contains organic material, is added. The process that is described in this publication is based on the fact that a considerable quantity of heat is evolved in the briquettes during the pressing operation.

The heat evolution is so considerable that a partial vaporisation of the water in the sludge occurs. Despite this vaporisation one can only add 10-25% sludge with a water content ranging from 25 to 35% after sun-drying of the sludge. In the example in said publication an upper calorific value of 16495 kJ/kg (3940 Kcal/kg) is given for a sample with about 17% sludge with a water content of about 30%.

EP-A1-91 532 discloses a process for the scientific utilization of solid municipal waste and waste of other origin for the production of an alternative high-energy fuel and the recovery of the remaining materials by a sequence of steps comprising mixing with additives capable of quickly inducing biochemical conversion, performing biochemical conversion, particularly through fermentation, separating the biochemically converted portion, addition thereto of a microbe-enzyme substrate with high humification capability so as to turn into a fertilizer, separating out magnetic materials, glass, etc. from materials of high calorific power, comminution of the last-mentioned materials and separating therefrom the portions of highest calorific power for the production of an alternative fuel to coal and diesel oil for industrial heating processes. Cellulosic fibres and waste materials from slaughter houses may be subjected to said multi-step treatment comprising degradation by fermentation.

The inventor of this invention has found it possible to avoid the complications and energy-wasting of the prior art by the use as a fuel defined in the claims of a mixture of cellulosic fibres, like straw or sugar-cane fibres, and fat- and/or oil-containing sludges and waste materials from slaughter houses, etc., whereby it is possible to add a larger quantity of oil-and/or fat-containing sludge or waste material and a larger waste content and manufacture and use the fuel in a simple way without any need to invest in expensive, energy consuming or production limiting machinery like a briquetting press. This is achieved according to the invention by heating the fat- and/or oil-containing sludge or waste material to 15-40°C after which the sludge or waste material is mechanically admixed with the cellulosic fibres, like straw or sugar-cane fibres in such proportions, that the resultant fuel has a dry matter content of 40-80% by weight, preferably 60%, and a water content of 20-60% by weight, preferably 40%. After mixing the fuel is ready for use.

It was unexpectedly found that by simply mechanically mixing the fat- and/or oil-containing sludge after a previous heating of the sludge to 15-40°C, preferably 25-35°C, when it changes into a homogenous fluent mass, it is possible to add considerably larger quantities of sludge with higher water contents and still achieve good results as far as the calorific value is concerned. The weight proportions of the fuel are preferably 26-74% by weight of straw and 26-74% by weight of oil-and/or fat-containing sludge, suitably is the mixing ratio 1:1. A typical sludge used for the purpose contains 85% by weight of water and 15% by weight of oil and/or fat and after being dried 40% by weight of water and 60% by weight of oil and/or fat.

## EXAMPLE

A fat sludge concentration with a water content of roughly 50% by weight was heated to about 30°C. The sludge was admixed with straw in the proportion 1:1, after which the volume of the straw was decreased considerably. It has appeared that the fat sludge when admixed is distributed on the upper surfaces of the straws. The mixture was odourless and immediately ready for use in a heating plant intended for fuels with high contents of volatile constituents. A fuel analysis points out an upper calorific value of 16412 kJ/kg. The dry matter content was 61,5% and the ash content 5,3% of the dry matter, by weight.

The result of the mixing is thus that 2 kg of fuel is obtained for each kg of straw with an energy value corresponding to 2 kg of straw and with a considerably smaller volume. Equally important or perhaps more important is that contamination of the environment with oil- and/or fat-concentrations is avoided.

## Claims

1. The use as a fuel of a mixture of (1) cellulosic fibres, and (2) fat- and/or oil-containing sludge or waste material from slaughter houses, milk-condensation plants, fishing industry, distilleries, public sewage purifying plants and tanker transports, said mixture being prepared as a fuel immediately ready for use by heating the fat- and/or oil-containing sludge or waste material to 15-40° C after which the sludge or waste material is admixed with the cellulosic fibres, in such a proportion that the resultant fuel has a dry matter content of 40-80% by weight and a water content of 20-60% by weight.

2. The use according to claim 1 wherein the cellulosic fibres consist of straw.

3. The use according to claim 1 wherein the cellulosic fibres consist of straw and sugarcane fibres.

4. The use according to any of claims 1-3 wherein the resultant fuel has a dry matter content of 60% by weight and a water content of 40% by weight.

5. The use according to claim 1 of a fuel containing 26-74% by weight of the straw, and 26-74% by weight of the fat- and/or oil-containing sludge, especially in a weight ratio of straw:fat- and/or oil-containing sludge of 1:1.

## Revendications

1. Utilisation en tant que comoustible d'un mélange de (1) fibres cellulosiques et (2) déchets ou résidus contenant de l'huile et/ou de la graisse, provenant d'abattoirs, d'usines de condensation du lait, de l'industrie de la pêche, de distilleries, installations d'épuration publiques et de transports par citerne, ledit mélange étant préparé en tant que combustible immédiatement prêt à l'emploi en chauffant les déchets ou résidus contenant de l'huile et/ou de la graisse à 15-40° C, après quoi les déchets ou résidus sont mélangés aux fibres cellulosiques, dans une proportion telle que le combustible résultant présente une teneur en matières sèches de 40-80% en poids et une teneur en eau de 20-60% en poids.

2. Utilisation selon la revendication 1, dans laquelle les fibres cellulosiques sont constituées de paille.

3. Utilisation selon la revendication 1, dans laquelle les fibres cellulosiques sont constituées de paille et de fibres de cannes à sucre.

4. Utilisation selon l'une quelconque des revendications 1 à 3, dans laquelle le combustible résultant présente une teneur en matières sèches de 60% en poids et une teneur en eau de 40% en poids.

5. Utilisation selon la revendication 1 d'un combustible contenant 26-74% en poids de paille, et 26-74% en poids de résidus contenant de l'huile et/ou de la graisse, en particulier en un rapport pondéral paille : résidus contenant de l'huile et/ou de la graisse de 1 : 1.

## Patentansprüche

1. Verwendung einer Mischung aus (1) zellulosehältigen Fasern und (2) fett- und/oder ölhältigen Rückständen und Schlämmen oder Abfallmaterialien aus Schlachthäusern, Kondensmilcherzeugungsanlagen, der Fischindustrie, aus Destillerien, öffentliche Klaranlagen und Tankertransporten als Brennstoff, welche Mischung dadurch als unmittelbar gebrauchsfertiger Brennstoff hergestellt wird, daß die fett- und/oder ölhältigen Rückstände, Schlämme oder Abfallmaterialien auf 15 - 40° C erhitzt und danach die Rückstände, Schlämme oder Abfallmaterialien mit den zellulosehältigen Fasern in einem solchen Verhältnis gemischt werden, daß der erhaltene Brennstoff einen Trockenmassegehalt von 40 - 80 Gewichtsprozent und einen Wassergehalt von 20 - 60 Gewichtsprozent hat.

2. Verwendung nach Anspruch 1, wobei die zellulosehältigen Fasern aus Stroh bestehen.

3. Verwendung nach Anspruch 1, wobei die zellulosehältigen Fasern aus Stroh und Zuckerrohrfasern bestehen.

4. Verwendung nach einem der Ansprüche 1 bis 3, wobei der erhaltene Brennstoff einen Trockenmasseanteil von 60 Gewichtsprozent und einen Wassergehalt von 40 Gewichtsprozent aufweist.

5. Verwendung nach Anspruch 1 eines Brennstoffes, der 26 - 74 Gewichtsprozent Stroh und 26 - 74 Gewichtsprozent der fett- und/oder ölhältigen Rückstände und Schlämme enthält, insbesondere bei einem Gewichtsverhältnis von Stroh : fett- und/oder ölhältige Schlämme von 1 : 1.